## Europäisches Patentamt
## European Patent Office
## Office européen des brevets

(11) Veröffentlichungsnummer: **0 396 743**

**A1**

(12)
# EUROPÄISCHE PATENTANMELDUNG
## veröffentlicht nach Art. 158 Abs. 3
## EPÜ

(21) Anmeldenummer: 88902620.9

(51) Int. Cl.5: **B23K 35/10, B23K 35/368**

(22) Anmeldetag: 26.07.88

(86) Internationale Anmeldenummer:
**PCT/SU88/00148**

(87) Internationale Veröffentlichungsnummer:
**WO 90/00953 (08.02.90 90/04)**

(43) Veröffentlichungstag der Anmeldung:
**14.11.90 Patentblatt 90/46**

(84) Benannte Vertragsstaaten:
**AT BE DE FR GB IT SE**

(71) Anmelder: **INSTITUT ELEKTROSVARKI IMENI E.O.PATONA AKADEMII NAUK UKRAINSKOI SSR**
**ul. Bozhenko, 11**
**Kiev, 252650(SU)**

Anmelder: **MAGNITOGORSKY GORNO-METALLURGICHESKY INSTITUT IMENI G.I.NOSOVA**
**pr. Lenina, 38**
**Magnitogorsk, 455000(SU)**

Anmelder: **ZAPOROZHSKY METIZNY ZAVOD IMENI XXYI SIEZDA KPSS**

**Zaporozhie, 330600(SU)**

(72) Erfinder: **PATON, Boris Evgenievich**
**ul. Kotsjubinskogo, 9-21**
**Kiev, 252000(SU)**
Erfinder: **VOROPAI, Nikolai Markovich**
**ul. Saljutnaya, 29a-25**
**Kiev, 252000(SU)**
Erfinder: **NIKIFOROV, Boris Alexandrovich**
**ul. Kuibysheva, 25-10**
**Magnitogorsk, 455018(SU)**
Erfinder: **SCHEGOLEV, Georgy Alexandrovich**
**ul. Oktyabrskaya, 11-20**
**Magnitogorsk, 455018(SU)**
Erfinder: **LOGIIKO, Gennady Pavlovich**
**ul. Zhdanova, 22-15**
**Magnitogorsk, 455000(SU)**
Erfinder: **MISCHANIN, Vasily Grigorievich**
**ul. Lermontova, 18-15**
**Zaporozhie, 330005(SU)**

(74) Vertreter: **Nix, Frank Arnold, Dr.**
**Kröckelbergstrasse 15**
**D-6200 Wiesbaden(DE)**

(54) **ELEKTRODENDRAHT.**

(57) Die Erfindung betrifft die Schweißtechnik. Der erfindungsgemäße Draht besteht aus einer Metallgrundlage (1), die einen längsgerichteten Hohlraum (3) hat, der mit einem Füllstoff (2) gefüllt ist, der wenigstens eine Komponente einer Gruppe enthält, die aus Legierungs- und schlackenbildenden Komponenten besteht.

Die Oberfläche des Hohlraums (3) und des Drahts hat einen Überzug (4, 7), der wenigstens zwei Schichten (5, 6 und 8, 9) hat. Jede dieser Schichten (5, 6 und 8, 9) besteht aus einer Komponente, die aus einer Gruppe ausgewählt ist, die aus Legierungs- und schlackenbildenden Komponenten besteht. Dabei befinden sich 10 bis 99% der Masse der Komponenten der Schichten (5, 6) des Überzugs (4) und der Schichten (8, 9) des Überzugs (7) auf der Oberfläche des Hohlraums (3), und die Gesamtfläche der Schichten (5, 6) des Überzugs (4) und der Schichten (8, 9) des Überzugs (7) im Querschnitt des Drahts, die aus gleichen Komponenten bestehen, beträgt 0,001 bis 0,1 der Fläche der Metallgrundlage (1).

FIG.1

## ELEKTRODENDRAHT

### Gebiet der Technik

Die vorliegende Erfindung bezieht sich auf die Schweißtechnik und betrifft einen Elektrodendraht, der aus einer metallischen Grundlage und einem Füllstoff besteht.

### Zugrundeliegender Stand der Technik

Gegenwärtig ist das Lichtbogen ℓ-Schutzgasschweißen (sowohl in oxydierenden als auch in Inertgasen) das verbreitetste Schweißverfahren in der Industrie. Im Bauwesen und auf Baustellen ist das Schweißen mit Schmelzelektroden ohne zusätzlichen Schutz üblich. Als Schmelzelektrode werden dabei Elektrodendrähte mit Vollquerschnitt und Elektrodendrähte mit inneren Hohlräumen, die mit einem pulverförmigen Füllstoff gefüllt sind, verwendet. Der Draht mit Vollquerschnitt stellt einen gleichförmigen, monolithischen, langgestreckten metalli-schen Stab dar. Der Elektrodendraht mit inneren Hohlräumen ist ein Verbundwerkstoff, der aus einer dünnwandigen Metallschale eines Rohr- oder komplizierteren Querschnitts und einem Füllstoff besteht. Der Füllstoff, der sich in dem von der Schale des Elektrodendrahts gebildeten inneren Hohlraum befindet, stellt ein aus Metallpulvern (Eisenpulver, Ferrolegierungen, Pulver von Legierungselementen) und schlackenbildenden und stabilisierenden Komponenten bestehendes mechanisches Gemisch dar. Das Verhältnis der Querschnittsfläche des mit Füllstoff gefüllten Raums des Elektrodendrahts mit inneren Hohlräumen zur Querschnittsfläche des gesamten Drahts beträgt in der Regel 0,5 bis 0,8.

Beim Schweißen mit Draht mit Vollquerschnitt sowohl in Schutzgasen, besonders in oxydierenden Gasen, als auch ohne zusätzlichen Schutz kommt es zu verstärktem Verspritzen des Elektrodenmetalls und ungenügendem Nahtaufbau. Zur Verhinderung der Porenbildung beim Schweißen niedriggekohlter und niedriglegierter Stähle enthält der Elektrodendraht mit Vollquerschnitt unbedingt Desoxydationsmittel – Silizium, Mangan, Titan, Aluminium und andere Elemente, die eine größere Affinität zu Sauerstoff haben als Eisen, und außerdem in einigen Fällen Legierungsbestandteile (Chrom, Vanadium, Molybdän u. a.). Das Vorhandensein von Desoxydations- und Legierungselementen in der Zusammensetzung des

- 2 -

Elektrodendrahts verschlechtert dessen Plastizität und erschwert und verteuert die Herstellungstechnologie von zum Schweißen notwendigem Draht mit kleinem Durchmesser (0,6 bis 1,6 mm). Hierbei ist bemerkenswert, daß, je höhere Anforderungen an die Güte des Metalls der Schweißnaht gestellt werden, der Draht um so mehr Legierungs- und Desoxydationselemente enthält und um so geringer die Plastizität (die Deformationsfähigkeit) des Drahts ist. Das Vorhandensein einer beliebigen, gegenwärtig bekannten Kombination von Legierungs- und Desoxydationselememten in der Stoffzusammensetzung des Materials von Draht mit Vollquerschnitt verhindert jedoch nicht das Verspritzen des Elektrodenmetalls, ermöglicht nicht eine wesentliche Verbesserung der Gestaltung der Oberfläche der Schweißnaht beim Schweißen in Schutzgasen und gewährleistet nicht die geforderten Nutzungseigenschaften des Metalls der Naht beim Schweißen ohne zusätzlichen Schutz.

Elektrodendrähte mit inneren Hohlräumen, die mit einem Füllstoff gefüllt sind, ermöglichen das Herstellen von Nähten hoher Güte und mit guten Nutzungseigenschaften sowohl beim Schutzgasschweißen, als auch beim Schweißen ohne zusätzlichen Schutz. Die Fähigkeit des Elektrodendrahts mit inneren Hohlräumen, sich bei Kaltverformung zu deformieren, ändert sich nur in geringem Maß beim Vorhandensein einer größeren oder kleineren Menge von Legierungskomponenten in der Zusammensetzung des Füllstoffs. Im Unterschied zum Draht mit Vollquerschnitt ist der Elektrodendraht mit inneren Hohlräumen jedoch kompliziert in der Herstellung und erfordert beim Schweißen spezielle Zuführungsmechanismen (mit mehreren Zuführungsrollenpaaren), die die Ausübung eines geringen spezifischen Drucks auf die Oberfläche des Drahts gewährleisten, der in der Regel aus kaltgewalztem, niedriggekohltem Stahl mit einer Dicke von 0,15 bis 0,5 mm hergestellt ist. Die metallische pulverförmigen Komponenten in der Zusammensetzung des Füllstoffs des Elektrodendrahts im Gemisch mit schlackenbildenden Komponenten unterliegen einer Korrosion, weshalb die Lagerungsfrist dieses Drahts begrenzt ist. Aus diesem Grund ist das Schweißen

- 3 -

mit Elektrodendraht mit inneren Hohlräumen nicht genügend zuverlässig in Bezug auf die Güte der entstehenden Schweißnähte.

Der Füllstoff von Elektrodendraht mit inneren Hohlräumen leitet den elektrischen Strom nicht, obwohl er in erheblicher Menge metallische Komponenten (Eisenpulver und Ferrolegierungen) enthält. Aus diesem Grund schmilzt beim Schweißen mit solchem Draht dessen Kern langsamer als die Metallschale. Infolge mangelnder Erhitzung gehen Raumteile des Füllstoffs ins Schweißbad über ohne zu schmelzen, wodurch die Wirksamkeit des Schlackenschutzes der Tropfen des geschmolzenen Metalls während ihres Wachstumsprozesses am Elektrodenende und ihres Übergangs ins Schweißbad eingeschränkt wird. d. h. ein Teil der Schlacke nimmt am Schutz des geschmolzenen Metalls von der Luft nicht teil. Deshalb enthält der Selbstschutz-Elektrodendraht mit inneren Hohlräumen im Füllstoff 15 bis 20 Masse% schlackenbildende Schutzstoffe, wodurch eine geringere Leistung dieses Elektrodendrahtes beim Schweißen im Vergleich zu Draht mit Vollquerschnitt bedingt ist.

Die Deformationsfähigkeit von Elektrodendraht mit inneren Hohlräumen ist bei der Herstellung wesentlich geringer als die von Draht mit Vollquerschnitt, da die dünnwandige Metallschale, deren Festigkeit begrenzt ist, bei Deformierung sowohl die vom Deformationswiderstand des Materials der Schale als auch vom Deformationswiderstand des pulverförmigen Füllstoffs erzeugte Belastung aufnehmen muß. Deshalb ist die Herstellungstechnologie von Elektrodendraht mit inneren Hohlräumen mit kleinem Durchmesser mit noch größeren Schwierigkeiten verbunden als die Herstellung von Draht mit Vollquerschnitt.

Eine Erhöhung der Schmelzleistung des Elektrodendrahts bei unveränderlichen positiven schweißtechnologischen Eigenschaften des Elektrodendrahts mit inneren Hohlräumen ist möglich bei Verwendung von Draht, der aus einer Metallgrundlage, die Legierungs- und Desoxydationskomponenten enthält, und einem Füllstoff aus pulverförmigen Komponenten, der sich in Längskanälen dieser Metallgrundlage

- 4 -

befindet, besteht.

Nach dem technischen Grundgedanken kommt ein Elektrodendraht - der vorliegend vorgeschlagenen Lösung am nächsten, der aus einer legierten Metallgrundlage besteht, die wenigstens einen längsgerichteten Hohlraum hat, der mit einem Füllstoff gefüllt ist, der wenigstens eine Komponente einer aus schlackenbildenden und Legierungskomponenten bestehenden Gruppe enthält (GB, A, Nr. 1481140).

Solch ein Draht gewährleistet im Unterschied zu Draht mit Vollquerschnitt ein minimales Verspritzen und einen guten Nahtaufbau. Außerdem hat dieser Draht eine ausreichende Steifigkeit, da er nicht aus einem Band, sondern aus vorgeformtem Halbzeug hergestellt wird und keine speziellen, mit mehreren Rollen ausgerüstete Zuführungsmechanismen erfordert. Die Herstellung von solchem Draht mit einem Durchmesser unter 1,6 mm ist jedoch nicht möglich auf Grund der niedrigen Plastizität der Metallgrundlage. Andererseits ist bekannt, daß man nur beim Schweißen mit Draht mit einem Durchmesser von 1,6 mm und darunter Schweißnähte bekommt, die die Betriebsfähigkeit von Konstruktionen aus Stahl gewährleisten, der Legierungskomponenten enthält. Die niedrige Plastizität der Metallgrundlage ist durch das Vorhandensein von Legierungskomponenten in der Metallgrundlage bedingt. Je größer der Anteil der Legierungskomponenten ist, um so geringer ist die Plastizität der Grundlage. Die Forderung nach konstanter chemischer Zusammensetzung des gesamten Volumens der Metallgrundlage verbietet die Warmverformung und thermische Behandlung nach der Kaltverformung der Metallgrundlage. Hohe Temperaturen bewirken eine Veränderung der chemischen Zusammensetzung der Oberflächenschichten der Metallgrundlage infolge deren Wechselwirkung mit dem umgebenden Medium. In diesem Fall hat der Draht mit 1,6 mm Durchmesser eine zu mehr als die Hälfte des Volumens der Metallgrundlage veränderte chemische Zusammensetzung, was sich negativ auf die Güte der Schweißnaht auswirkt. Folglich muß dieser Draht durch Kaltverformung hergestellt werden. Die Her-

- 5 -

stellung von Draht mit solch einer komplizierten Form des Querschnitts ohne zusätzliche Wärmebehandlung ist jedoch nicht möglich auf Grund der niedrigen Plastizität der Metallgrundlage. Der Gedanke liegt nahe, die Mehrzahl der beim Schweißen notwendigen Legierungskomponenten dem Füllstoff des Elektrodendrahts beizugeben. Diese Methode ist jedoch wenig wirksam, da die Verluste der Legierungskomponenten beim Schmelzen 20 bis 90 % betragen in Abhängigkeit von den Schweißparametern und der Affinität der Legierungskomponenten zu Sauerstoff. Zusammenfassend kann man sagen, daß die Zugabe von Legierungselementen in die Metallgrundlage des Drahts dessen Deformationsfähigkeit verschlechtert, während ihr Vorhandensein im Füllstoff zu erheblichen Verlusten der Legierungselemente durch Abbrand beim Schweißen führt.

Offenbarung der Erfindung

Der vorliegenden Erfindung liegt die Aufgabe zugrunde, solch einen Elektrodendraht zu schaffen, dessen Konstruktion, chemische und mengenmäßige Zusammensetzung eine hohe Plastizität der metallischen Grundlage bei der Kaltumformung des Drahtes gewährleisten, wodurch ihrerseits ein Draht mit hohen schweißtechnologischen Eigenschaften (minimal möglichen Verlusten an Legierungskomponenten beim Drahtschmelzen, einer hohen Leistung des Schweißvorganges, einer hohen Effektivität der Wärmeausnutzung beim Drahtschmelzen) erhalten werden kann.

Die gestellte Aufgabe wird dadurch gelöst, daß in einem Elektrodendraht, der aus einer legierten Metallgrundlage besteht, die wenigstens einen längsgerichteten Hohlraum hat, der mit einem Füllstoff gefüllt ist, der wenigstens eine Komponente einer aus schlackenbildenden und Legierungskomponenten bestehenden Gruppe enthält, gemäß der Erfindung auf die Oberfläche der Hohlräume und des Drahts ein Überzug aufgetragen wird, der wenigstens zwei Schichten enthält, von denen jede aus einer Komponente besteht, die aus einer aus Legierungs- und schlackenbildenden Komponenten bestehenden Gruppe ausgewählt ist, wobei

- 6 -

10 bis 99 % der Masse der Komponenten der Schichten des Überzuges sich auf der Oberfläche der Hohlräume befinden und die Gesamtfläche der Schichten des Überzuges im Querschnitt des Drahts, die aus gleichen Komponenten bestehen, 0,001 bis 0,1 der Fläche der Metallgrundlage beträgt.

Der Hauptvorteil eines Drahts solcher Konstruktion besteht darin, daß das Aufbringen von Legierungs- und schlackenbildenden Komponenten auf die Oberfläche der Hohlräume und des Drahts dem Material der Metallgrundlage neue Eigenschaften bei der Kaltverformung verleiht, und zwar eine hohe Plastizität, wodurch die maximale Verformbarkeit der Metallgrundlage zunimmt, ohne daß Zerstörungsmerkmale auftreten.

Eine positive Eigenschaft eines solchen Drahts im Vergleich zu bekannten Drähten dieses Typs ist ein geringerer Verbrauch an Legierungs- und schlackenbildenden Komponenten beim Schweißen. Die Aufbringung des größeren Teils der Legierungskomponenten nicht im Innenraum der Metallgrundlage, sondern auf der Oberfläche des Drahts und der Hohlräume erhöht dessen Deformationsfähigkeit. Die Verringerung der Menge der Legierungs- und schlackenbildenden Komponenten in der Zusammensetzung des Füllstoffs und das Aufbringen dieser Komponenten auf die Oberfläche der Hohlräume und des Drahts begrenzt die Verluste an Legierungselementen beim Schmelzen des Drahts bis auf ein Minimum, da dabei die Fläche des Kontakts der Legierungselemente mit der Schlacke und den Gasen beim Erhitzen des Drahts vor dem Schmelzen um ein bis zwei Größenordnungen kleiner ist. Die Menge der in den Hohlräumen bei solch einer Konstruktion befindlichen Komponenten ist bis auf ein Minimum verringert worden, wodurch eine wirkungsvollere Ausnutzung der Wärme zum Erhitzen und Schmelzen des Drahts erzielt wird.

Außerdem werden die unter gewöhnlichen Umständen elektrisch nichtleitenden schlackenbildenden Komponenten zu elektrischen Leitern, wenn sie auf die Oberfläche in Form eines dünnen Belags aufgetragen sind. Das bedeutet, daß, wenn die Dicke der Schicht der schlackenbildenden Komponenten auf der Oberfläche des Drahts und des Innenraums kleiner als ein vorgegebener Wert (individuell unterschiedlich für jede Komponente) ist, die Schicht ebenso wie die Metallgrundlage durch die Wärme schmilzt, die im Volumen der Grundlage infolge des elektrischen Widerstands frei wird und nicht durch die von der Metallgrundlage ausgehende Wärme, wodurch ebenfalls die Leistung des Schmelzprozesses erhöht wird.

Die Aufbringung von weniger als 10 % der Masse der Komponenten des Überzuges auf die Oberfläche der Hohlräume hat einen wesentlichen Einfluß auf die chemische Zusammensetzung der Schweißnaht, da beim Schweißen die Komponenten des Überzuges in  erheblichem Maß sublimieren und oxydiert werden infolge der Zusammenwirkung mit der Luft. Das Auftragen von mehr als 99% der Masse der Beschichtungskomponenten auf die Oberfläche der Hohlräume ist mit großen Schwierigkeiten der Gewährleistung des Schutzes der Oberfläche des Drahts vor der Zusammenwirkung mit der Quelle für das Auftragen des Überzuges verbunden.

Wenn eine Komponente insgesamt weniger als 0,001 der Fläche der Metallgrundlage einnimmt, ist ihr Einfluß unwirksam, da der Aufwand für das Aufbringen des Überzuges größer wird als der Effekt von der Verbesserung der Eigenschaften der Schweißnaht und der Erhöhung der Leistung. Wenn ein und dieselbe Komponente insgesamt mehr als 0,1 der Metallgrundlage einnimmt, verringert sich ebenfalls die Effektivität des Einflusses dieser Komponente, da in diesem Fall der positive Einfluß .des Überzuges auf die Effektivität des Schmelzens des Drahts und die Schmelzleistung wenig spürbar ist, während das Auftragen des Überzuges einen wesentlich höheren Aufwand erfordert.

Es ist zweckmäßig, daß die Legierungskomponenten, aus einer Gruppe ausgewählt werden, die aus Mg, Al, Si, Ca, Ti, V, Cr, Mn, Co, Ni, Cu, Y, Zr, Nb, Mo, Cd, Ba, La, Ta, W und Ce besteht.

Die Zweckmäßigkeit des Vorhandenseins dieser Komponenten auf der Oberfläche der Hohlräume und des Drahts ist durch ihre Fähigkeit, die Plastizität der Metallgrundlage zu erhöhen, und durch ihre legierende Wirkung auf die Zusammensetzung des Metalls der Schweißnaht bedingt.

Es ist auch zweckmäßig, daß die schlackenbildenden Komponenten des Überzuges aus einer Gruppe ausgewählt werden, die aus Karbiden, Fluoriden, Chloriden und Oxiden von Mg, Al, Si, Ca, Ti, V, Cr, Mn, Co, Ni, Cu, Y, Zr, Nb, Mo, Cd, Ba, La, Ta, W und Ce besteht.

Als positive Eigenschaft eines solchen Drahts im Vergleich zu bekanntem Draht tritt eine Erhöhung der Verformbarkeit des Drahts infolge der Erhöhung der Plastizität der Metallgrundlage in Erscheinung. Die Erhöhung der Plastizität bei Erhaltung hoher schweißtechnischer Eigenschaften des Drahts wird durch Aufbringen der schlackenbildenden Komponenten unmittelbar auf die Oberfläche des Drahts und der Hohlräume erreicht. Das ermöglicht die Herstellung von Draht mit einem kleineren Durchmesser als bei der bekannten Konstruktion. Außerdem ermöglicht das Aufbringen der schlackenbildenden Komponenten auf die Oberfläche des Drahts und der Hohlräume eine Verringerung der Größe der Hohlräume und folglich eine Vergrößerung des relativen Volumens der Metallgrundlage im Draht und die Durchführung des Schweißprozesses mit einer hohen Leistung. Außerdem wird ein zuverlässiger Schutz des geschmolzenen Metalls durch die Schlackenhülle (die beim Schmelzen des Füllstoffs entsteht) beim Schweißen und ein gutes Loslösen der Schlackenhülle von der Oberfläche der Schweißnaht gewährleistet. Die Wirksamkeit des Schutzes des geschmolzenen Metalls ist durch die erfindungsgemäße Anordnung der schlackenbildenden Komponenten auf der Oberfläche der Hohlräume und des Drahts bedingt.

Es ist zweckmäßig, daß die Plastizität der Komponenten der an der Metallgrundlage anliegenden Schicht und der am weitesten von ihr entfernten Schicht größer ist als die Plastizität der Metallgrundlage.

Die Erhöhung der Plastizität dieser Schichten im Vergleich zur Plastizität der Metallgrundlage ermöglicht eine weitere Erhöhung der Deformationsfähigkeit des Materials der Grundlage. Die Erhöhung der Plastizität der Metallgrundlage ist durch die Einwirkung des Überzuges auf die Grundlage bedingt. Die Notwendigkeit des Aufbringens von Schichten, deren Plastizität höher ist als die Plastizität der Grundlage, unmittelbar auf die Metallgrundlage ist durch den Mechanismus der plastischen Deformation der Schichten begründet, was in einer Erhöhung der Plastizität der Metallgrundlage in Erscheinung tritt. Die Erhöhung der Plastizität der Metallgrundlage ermöglicht wiederum die Herstellung von Draht mit kleinem Durchmesser (unter 1,6 mm) und eine Erhöhung der Leistung der Ausrüstung.

Die aus Komponenten, deren Plastizität kleiner ist als die der Metallgrundlage, bestehenden Schichten des Überzuges können zwischen den Schichten angeordnet werden, deren Plastizität größer ist als die der Metallgrundlage.

In diesem Fall erhöht sich beim Ziehen des Drahts dessen maximale Verformbarkeit, da die weniger plastischen Komponenten sich in einer plastischen Einfassung befinden und deshalb deformiert werden können, ohne den Gesamtverformungsgrad der Metallgrundlage zu beeinflussen. Die Erhöhung der maximalen Verformbarkeit des Drahts erhöht die Leistung des Herstellungsprozesses und ermöglicht die Produktion von Draht mit kleinem Durchmesser ohne zusätzliche Wärmebehandlung, was sich günstig auf die Qualität der Schweißnaht auswirkt.

Auf die Oberfläche des Drahts kann ein Überzug aufgetragen werden, dessen Schichten aus Legierungs- und schlakenbildenden Komponenten bestehen, die elektrisch leitend sind.

Das ermöglicht eine Verbesserung der Stromzuführung zur Metallgrundlage und eine Erhöhung der Leistung des Schmelzprozesses des Drahts beim Schweißen.

Auf die Oberfläche des Drahts kann ein Überzug aufgebracht werden, der wenigstens aus drei Schichten besteht, wobei die am weitesten von der Metallgrundlage entfernte Schicht und die an der Metallgrundlage anliegende Schicht aus Legierungs- und schlackenbildenden Komponenten, die elektrisch leitend sind, bestehen und die zwischen diesen Schichten gelegene Schicht aus Abschnitten zusammengesetzt ist, die aus stromleitenden Legierungs- und schlackenbildenden Komponenten und abwechselnd mit diesen Längs des Drahts aus Abschnitten, die ebenfalls aus Legierungs- und schlakkenbildenden, aber elektrisch isolierenden Komponenten bestehen.

In diesem Fall entsteht die Möglichkeit, auf die Oberfläche des Drahts Komponenten aufzutragen, die die Eigenschaften von Nichtleitern haben, die jedoch günstig den Schweißprozeß beeinflussen. Das Vorhandensein elektrisch leitender Abschnitte vermeidet eine Senkung der Leistung des Schweißens und gewährleistet eine gleichmäßige Stromzuführung zur Metallgrundlage.

Es ist zweckmäßig, auf die Oberfläche des Drahts einen Überzug aufzutragen, der wenigstens aus drei Schichten besteht, wobei die am weitesten von der Metallgrundlage entfernte Schicht und die an der Metallgrundlage anliegende Schicht aus Legierungskomponenten bestehen und die zwischen diesen Schichten gelegene Schicht aus schlackenbildenden Komponenten besteht.

Das ermöglicht eine Erhöhung der maximalen Verformbarkeit des Drahts, die Herstellung von Draht mit kleinem Durchmesser und die Gewährleistung einer hohen Güte der Schweißnaht.

Auf der Oberfläche des Drahts und der Hohlräume kann ein Überzug aufgetragen werden, bei dem die Härte der Komponenten der an der Metallgrundlage anliegenden Schicht und der Komponenten der am weitesten von der Metallgrund- lage entfernten Schicht geringer ist als die Härte der Metallgrundlage.

Das ermöglicht ebenfalls eine Erhöhung der maximalen Verformbarkeit des Drahts, eine Erhöhung der Leistung des Herstellungsprozesses des Drahts, die Herstellung von Draht mit kleinen Durchmessern und die Erzielung einer hohen Güte der Schweißnaht.

Es ist zweckmäßig, die Schichten des Überzuges aus Komponenten, deren Härte größer ist als die Härte der Metallgrundlage, zwischen Schichten aus Komponenten mit geringerer Härte als die der Metallgrundlage anzuordnen.

In diesem Fall wird bei der plastischen Bearbeitung des Drahts die Deformierung der Schichten aus Komponenten mit größerer Härte als die der Metallgrundlage infolge des Auftretens zusätzlicher Spannungen in diesen Schichten erleichtert. Das ermöglicht wiederum eine Erhöhung der maximalen Verformbarkeit des Drahts, eine Erhöhung der Leistung bei der Herstellung des Drahts, die Herstellung von Draht mit kleinen Durchmessern und die Erzielung einer besseren Qualität des Drahtes.

Kurze Beschreibung der Zeichnungen

Im folgenden wird die vorliegende Erfindung durch eine ausführliche Beschreibung eines konkreten Ausführungsbeispiels mit Hinweisen auf die beiliegenden Zeichnungen erläutert, und zwar zeigt:

Fig. 1 die Gesamtansicht einer Ausführungsvariante eines erfindungsgemäßen Elektrodendrahts mit einem ovalen Hohlraum und einem zweischichtigen Überzug auf der Oberfläche des Drahts und der Hohlräume im Querschnitt;

Fig. 2 die Gesamtansicht einer anderen Ausführungsvariante eines erfindungsgemäßen Elektrodendrahts mit einem zylindrischen Hohlraum und einem vierschichtigen Überzug auf der Oberfläche des Hohlraums und einem zweischichtigen Überzug auf der Oberfläche des Drahts im Querschnitt;

Fig. 3 noch eine Ausführungsvariante eines erfindungsgemäßen Elektrodendrahts mit Spezialprofil des Hohlraums und dreischichtigem Überzug auf der Oberfläche des Drahts und der Hohlräume im Querschnitt;

Fig. 4 eine Ausführungsvariante eines erfindungsgemäßen Elektrodendrahts mit vier zylindrischen Hohlräumen und dreischichtigem Überzug auf der Oberfläche des Drahts und der Hohlräume im Querschnitt;

- 12 -

Fig. 5 eine Ausführungsvariante eines erfindungsgemäßen Elektrodendrahts mit drei zylindrischen Hohlräumen und fünfschichtigem Überzug auf der Oberfläche des Drahts und der Hohlräume im Querschnitt;

Fig. 6 eine Ausführungsvariante eines erfindungsgemäßen Elektrodendrahts mit zwei zylindrischen Hohlräumen und dreischichtigem Überzug auf der Oberfläche des Drahts und der Hohlräume, dessen mittlere Schicht auf der Oberfläche des Drahts aus einander abwechselnden stromleitenden und nichtleitenden Abschnitten besteht, teilweise axonometrisch mit Ausschnitten.

Bevorzugte Ausführungsvariante der Erfindung

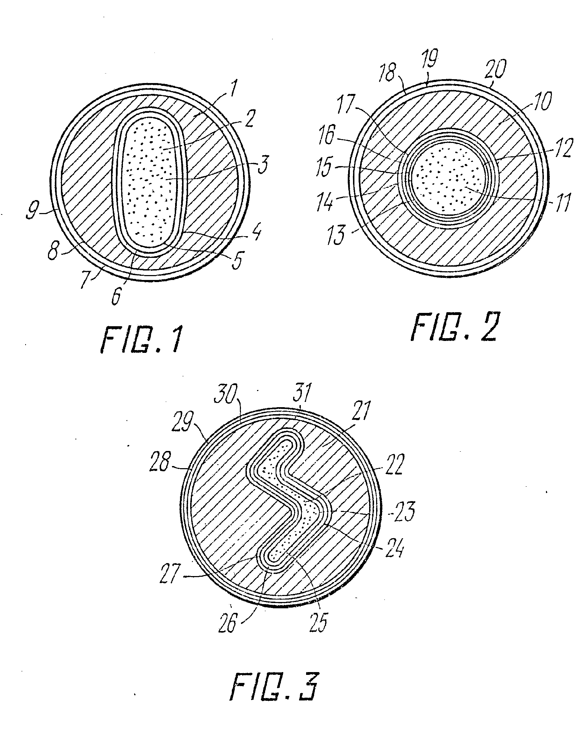

Der Elektrodendraht, dessen Querschnittsvarianten in Fig. 1 bis 6 abgebildet sind, besteht aus einer legierten Metallgrundlage, die wenigstens mit einem längsgerichteten Hohlraum ausgeführt ist, der mit einem Füllstoff gefüllt ist, der aus schlackenbildenden und Legierungskomponenten besteht. Gemäß der Erfindung ist auf die Oberfläche der Hohlräume und des Drahts ein Überzug aufgetragen, der aus wenigstens zwei Schichten besteht, von denen jede aus einer Komponente besteht, die aus einer Gruppe ausgewählt ist, die aus Legierungs- und schlackenbildenden Komponenten besteht. Dabei befinden sich 10 bis 99 % der Masse der Schichten des Überzuges auf der Oberfläche der Hohlräume, und die Gesamtfläche der Schichten des Überzuges im Querschnitt des Drahts, die aus gleichen Komponenten bestehen, beträgt 0,001 bis 0,1 der Fläche der Metallgrundlage. Die Legierungskomponenten sind aus einer Gruppe ausgewählt, die aus Mg, Al, Si Ca, Ti, V, Cr, Mn, Co, Ni, Cu, Y, Zr, Nb, Mo, Cd, Ba, La, Ta, W und Ce besteht, während die schlackenbildenden Komponenten aus einer Gruppe ausgewählt werden, die aus Karbiden, Oxiden, Chloriden und Fluoriden von Mg, Al, Si, Ca, Ti, V, Cr, Mn, Co, Ni, Cu, Y, Zr, Nb, Mo, Cd, Ba, La, Ta, W und Ce besteht. Die Plastizität der Komponenten der an der Metallgrundlage anliegenden Schicht und die Plastizität der Komponenten der am weite-

- 13 -

sten von der Metallgrundlage entfernten Schicht ist größer als die Plastizität der Metallgrundlage. Die Schichten des Überzuges, die aus Komponenten mit einer niedrigeren Plastizität als die der Metallgrundlage bestehen, befinden sich zwischen Schichten, die aus Komponenten mit einer höheren Plastizität als die der Metallgrundlage bestehen. Auf der Oberfläche des Drahts befindet sich ein Überzug, dessen Schichten aus Legierungs- und schlackenbildenden, stromleitenden Komponenten bestehen. Auf der Oberfläche des Drahts befindet sich ein Überzug, der aus wenigstens drei Schichten besteht und bei dem die am weitesten von der Metallgrundlage entfernte Schicht und die an der Metallgrundlage anliegende Schicht aus Legierungs- und schlackenbildenden Komponenten, die elektrisch leitend sind, bestehen und die zwischen diesen Schichten gelegene Schicht aus Abschnitten zusammengesetzt ist, die aus Legierungs- und schlackenbildenden, elektrisch leitenden Komponenten und abwechselnd mit ihnen längs des Drahts aus Abschnitten, die ebenfalls aus Legierungs- und schlakkenbildenden, aber elektrisch isolierenden, d. h. nichtleitenden Komponenten bestehen. Auf der Oberfläche des Drahts befindet sich ein aus mindestens drei Schichten bestehender Überzug, bei dem die am weitesten von der Metallgrundlage entfernte Schicht und die an der Metallgrundlage anliegende Schicht aus Legierungskomponenten bestehen, während die zwischen diesen Schichten befindliche Schicht aus schlackenbildenden Komponenten besteht.

Die Härte der Komponenten der an der Metallgrundlage anliegenden Schicht und der am weitesten von ihr entfernten Schicht ist kleiner als die Härte der Metallgrundlage. Die Schichten des Überzugs, die aus Komponenten mit einer höheren Härte als die der Metallgrundlage bestehen, befinden sich zwischen den Schichten, die aus Komponenten mit einer geringeren Härte als die der Metallgrundlage bestehen.

Der in Fig. 1 abgebildete Elektrodendraht besteht aus einer legierten Metallgrundlage 1 und einem Füllstoff 2,

- 14 -

der wenigstens eine Komponente aus einer Gruppe enthält, die aus Legierungs- und schlackenbildenden Komponenten besteht, und der sich in einem längsgerichteten ovalen Hohlraum 3 befindet. Gemäß der Erfindung ist auf die Oberfläche des Hohlraums 3 ein Überzug 4 aufgetragen, der aus zwei Schichten 5 und 6 besteht. Jede Schicht 5 und 6 besteht aus einer Komponente, die aus einer Gruppe ausgewählt ist, die aus Legierungs- und schlackenbildenden Komponenten besteht, und auf der Oberfläche des Drahts befindet sich ein Überzug 7, der aus zwei Schichten 8 und 9 besteht. Jede Schicht 8 und 9 besteht aus einer Komponente, die aus einer Gruppe ausgewählt ist, die aus Legierungs- und schlackenbildenden Komponenten besteht. Dabei befinden sich 10 bis 99 % der Masse der Komponenten der Schichten 5 und 6 des Überzugs 4 und der Schichten 8 und 9 des Überzugs 7 auf der Oberfläche des Hohlraums 3, während die Gesamtfläche der Schichten 5 und 6 des Überzugs 4 und der Schichten 8 und 9 des Überzugs 7 im Querschnitt des Drahts, die aus gleichen Komponenten bestehen, 0,001 bis 0,1 der Fläche der Metallgrundlage 1 beträgt.

Der in Fig. 2 abgebildete Elektrodendraht besteht aus einer legierten Metallgrundlage 10 und einem Füllstoff 11, der wenigstens eine Komponente einer Gruppe enthält, die aus Legierungs- und schlackenbildenden Komponenten besteht, und der sich in einem längsgerichteten zylindrischen Hohlraum 12 befindet. Gemäß der Erfindung befindet sich auf der Oberfläche des Raums 12 ein Überzug 13, der aus vier Schichten 14, 15, 16 und 17 besteht, von denen jede aus einer Komponenten besteht, die aus einer Gruppe ausgewählt ist, die aus Legierungs- und schlackenbildenden Komponenten besteht. Auf der Oberfläche des Drahts befindet sich ein Überzug 18, der zwei Schichten 19 und 20 hat, von denen jede aus einer Komponente besteht, die aus einer Gruppe ausgewählt ist, die aus Legierungs- und schlackenbildenden Komponenten besteht. Die Legierungskomponenten werden aus der Gruppe Mg, Al, Si, Ca, Ti, V, Cr, Mn, Co, Ni, Cu, Y, Zr, Nb, Mo, Cd,

- 15 -

Ba, La, Ta, W und Ce und die schlackenbildenden Komponenten aus einer aus Oxiden, Karbiden, Chloriden und Fluoriden von Mg, Al, Si, Ca, Ti, V, Cr, Mn, Co, Ni, Cu,Y,Zr, Nb, Mo, Cd, Ba, La, Ta, W und Ce bestehenden Gruppe ausgewählt.

Dabei befinden sich 10 bis 99 % der Masse der Komponenten der Schichten 14, 15, 16 und 17 des Überzugs 13 und der Schichten 19 und 20 des Überzugs 18 auf der Oberfläche des Hohlraums 12, während die Gesamtfläche der Schichten 14, 15, 16 und 17 des Überzugs 13 und der Schichten 19 und 20 des Überzugs 18 im Querschnitt des Drahts, die aus gleichen Komponenten bestehen, 0,001 bis 0,1 Teil der Fläche der Metallgrundlage 10 beträgt.

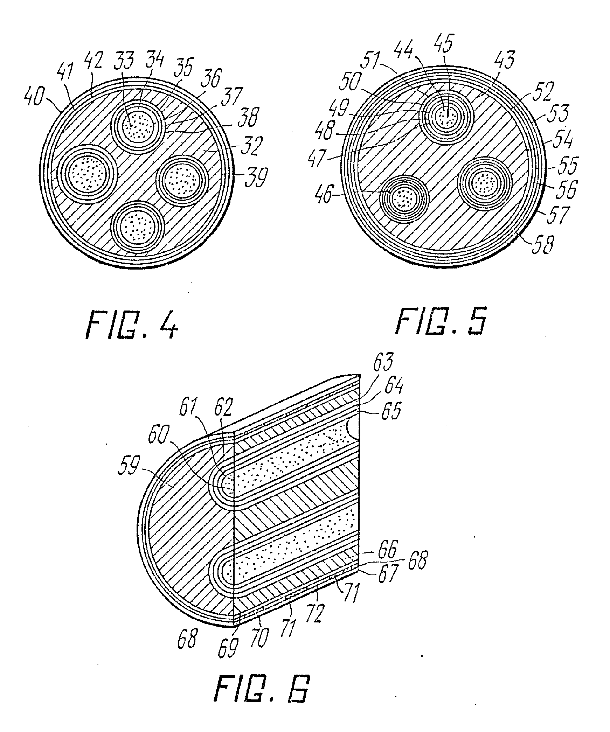

Der in Fig. 3 abgebildete Elektrodendraht besteht aus einer legierten Metallgrundlage 21 und einem Füllstoff 22, der wenigstens eine Komponente einer Gruppe enthält, die aus Legierungs- und schlackenbildenden Komponenten besteht, und der sich in einem Hohlraum 23 mit Spezialprofil befindet. Gemäß der Erfindung befindet sich auf der Oberfläche des Raums 23 ein Überzug 24, der drei Schichten 25, 26 und 27 hat, von denen jede aus einer Komponenten besteht, die aus einer Gruppe ausgewählt ist, die aus Legierungs- und schlackenbildenden Komponenten besteht. Auf der Oberfläche des Drahts befindet sich ein Überzug 28, der drei Schichten 29, 30 und 31 hat, von denen jede aus einer Komponente besteht, die aus einer Gruppe ausgewählt ist, die aus Legierungs- und schlackenbildenden Komponenten besteht. Dabei befinden sich 10 bis 99 % der Masse der Komponenten der Schichten 25, 26 und 27 des Überzugs 24 und der Schichten 29, 30 und 31 des Überzugs 28 auf der Oberfläche des Hohlraums 23, während die Gesamtfläche der Schichten 25, 26 und 27 des Überzugs 24 und der Schichten 29, 30 und 31 des Überzugs 28, die aus gleichen Komponenten bestehen, 0,001 bis 0,1 der Fläche der Metallgrundlage 21 beträgt. Die Plastizität der Komponenten der an die Metallgrundlage 21 anliegenden Schicht 27 und der Komponente der am weitesten von ihr entfernten Schicht 25 ist größer als die Plastizität der Metallgrundlage 21.

- 16 -

Die Plastizität der Komponenten der an der Metallgrundlage 21 anliegenden Schicht 31 und der am weitesten von ihr entfernten Schicht 29 ist größer als die Plastizität der Metallgrundlage.

Der in Fig. 4 abgebildete Elektrodendraht besteht aus einer legierten Metallgrundlage 32 und einem Füllstoff 33, der wenigstens eine Komponente einer Gruppe enthält, die aus Legierungs- und schlackenbildenden Komponenten besteht, und der sich in vier zylindrischen Hohlräumen 34 befindet. Gemäß der Erfindung befindet sich auf der Oberfläche der Hohlräume 34 ein Überzug 35, der drei Schichten 36, 37 und 38 hat, von denen jede aus einer Komponente besteht, die aus einer Gruppe ausgewählt ist, die aus Legierungs- und schlackenbildenden Komponenten besteht. Auf der Oberfläche des Drahts befindet sich ein Überzug 39, der drei Schichten 40, 41 und 42 hat, von denen jede aus einer Komponente besteht, die aus einer Gruppe ausgewählt ist, die aus Legierungs- und schlackenbildenden Komponenten besteht. Dabei befinden sich 10 bis 99 % der Masse der Komponenten der Schicht 36, 37 und 38 des Überzuges 35 und der Schichten 40, 41 und 42 des Überzugs 39 auf der Oberfläche der Hohlräume 34, während die Gesamtfläche der Schichten 36, 37 und 38 des Überzugs 35 und der Schichten 40, 41 und 42 des Überzugs 39 im Querschnitt des Drahts, die aus gleichen Komponenten bestehen, 0,001 bis 0,1 der Fläche der Metallgrundlage 32 beträgt.

Die Schichten 40, 41 und 42 des Überzugs bestehen aus stromleitenden Legierungs- und schlackenbildenden Komponenten.

Der in Fig. 5 abgebildete Elektrodendraht besteht aus einer legierten Metallgrundlage 43 und einem Füllstoff 44, der wenigstens eine Komponente einer Gruppe enthält, die aus Legierungs- und schlackenbildenden Komponenten besteht, und der sich in drei zylindrischen Hohlräumen 45 befindet. Gemäß der Erfindung befindet sich auf der Oberfläche der Hohlräume 45 ein Überzug 46, der fünf Schichten 47, 48, 49 50 und 51 hat, von denen jede aus einer Komponente besteht, die aus einer Gruppe ausgewählt ist, die aus Legierungs- und schlackenbildenden Komponenten besteht. Auf der Oberfläche des Drahts befindet sich ein Überzug 52 aus sechs Schichten 53, 54, 55, 56, 57 und 58, von denen jede aus einer Komponenten besteht, die aus einer Gruppe ausgewählt ist, die aus Legierungs- und schlackenbildenden Komponenten besteht. Dabei befinden sich 10 bis 99% der Masse der Komponenten der Schichten 47, 48, 49, 50 und 51 des Überzugs 46 und der Schichten 53, 54, 55, 56, 57 und 58 des Überzugs 52 auf der Oberfläche der Hohlräume 45, während die Gesamtfläche der Schichten 47, 48, 49, 50 und 51 des Überzugs 46 und der Schichten 53, 54, 55, 56, 57 und 58 des Überzugs 52 im Querschnitt des Drahts, die aus gleichen Komponenten bestehen, 0,001 bis 0,1 der Fläche der Metallgrundlage 43 beträgt. Die Schichten 47, 49 und 51 des Überzugs 56 bestehen aus Legierungskomponenten und die zwischen ihnen befindlichen Schichten 48 und 50 aus schlackenbildenden Komponenten.

Der in Fig. 6 abgebildete Elektrodendraht besteht aus einer legierten Metallgrundlage 59 und einem Füllstoff 60, der wenigstens eine Komponente einer Gruppe enthält, die aus Legierungs- und schlackenbildenden Komponenten besteht, und der sich in zwei zylindrischen Hohlräumen 61 befindet. Gemäß der Erfindung befindet sich auf der Oberfläche der Hohlräume 61 ein Überzug 62 aus drei Schichten 63, 64 und 65, von denen jede aus einer Komponente besteht, die aus einer Gruppe ausgewählt ist, die aus Legierungs- und schlackenbildenden Komponenten besteht. Auf der Oberfläche des Drahts befindet sich ein Überzug 66. Die Ebene 67 stellt die Symmetrieebene des Drahts dar. Der Überzug 66 hat drei Schichten 68, 69 und 70. Die Schichten 68 und 70 bestehen aus einer Komponente, die aus einer Gruppe ausgewählt ist, die aus Legierungs- und schlackenbildenden Komponenten besteht. Die Schicht 69 ist aus Abschnitten 71 zusammengesetzt, die aus stromleitenden Legierungs- und schlackenbildenden Komponenten und abwechselnd mit diesen

- 18 -

längs des Drahts aus Abschnitten 72, die ebenfalls aus Legierungs- und schlackenbildenden Komponenten, aber elektrisch isolierenden, d. h. nichtleitenden Komponenten bestehen. Dabei befinden sich 10 bis 99 % der Masse der Komponenten der Schichten 63, 64 und 65 des Überzugs 62 und der Schichten 68, 69 und 70 des Überzugs 66 auf der Oberfläche der Hohlräume 61, während die Gesamtfläche der Schichten 63, 64 und 65 des Überzugs 62 und der Schichten 68, 69 und 70 des Überzugs 66 im Querschnitt des Drahts, die aus gleichen Komponenten bestehen, 0,001 bis 0,1 Teil der Fläche der Metallgrundlage 59 beträgt.

Im folgenden werden konkrete Ausführungsbeispiele angeführt.

Beispiel 1

Ein Elektrodendraht mit 1,2 mm Durchmesser hat eine Metallgrundlage, die folgende Stoffe enthält (Masse%): C - 0,08, Mn - 0,8; Si - 0,2; Fe - den Rest, einen Füllstoff, der sich in einem Hohlraum mit ovalem Querschnitt befindet und folgende pulverförmige, schlackenbildende Komponenten enthält: $TiO_2$, $CaF_2$, MnO und die Legierungskomponente Mn, sowie Überzüge die sich auf der Oberfläche des Drahts und der Hohlräume befinden und aus je zwei Schichten Cu und Ni bestehen, die Legierungskomponenten darstellen. Dabei befinden sich 90% der Masse der Komponenten Cu und Ni des Überzugs auf der Oberfläche des Drahts und 10 % ihrer Masse -- auf der Oberfläche des Hohlraums. Die Fläche der Schichten der Überzüge im Querschnitt des Drahts, die aus der Komponente Cu bestehen, beträgt 0,01 der Fläche der Metallgrundlage, während die Fläche der Schichten des Überzuges aus der Komponente Ni 0,005 der Fläche der Metallgrundlage beträgt. Die aus Cu bestehenden Schichten liegen unmittelbar an der Metallgrundlage an. Die Dicke der Schichten aus Cu auf der Oberfläche des Drahts und auf der Oberfläche des Hohlraums beträgt $2,4 \cdot 10^{-3}$ mm bzw. $4,5 \cdot 10^{-3}$ mm, während die Dicke der Schichten aus Ni auf der Oberfläche des Drahts und auf der Oberfläche des Hohlraums $1,2 \cdot 10^{-3}$ mm bzw. $2,25 \cdot 10^{-3}$ mm beträgt. Die

- 19 -

Fläche des Hohlraums beträgt 10 % der Fläche des Drahts im Querschnitt. Die Plastizität der Komponente Cu in der an der Metallgrundlage anliegenden Schicht und die Plastizität der Komponente Ni in der am weitesten von ihr entfernten Schicht ist größer als die Plastizität der Metallgrundlage. Die Plastizität der Komponenten Cu und Ni und der Metallgrundlage wird durch die Größe der relativen Brucheinschnürung von 80 % , 72 % bzw. 43 % gekennzeichnet.

Beispiel 2

Ein Elektrodendraht mit 1,2 mm Durchmesser hat eine Metallgrundlage, die folgende Stoffe enthält (Masse%): C - 0,08% Mn - 0,9; Si - 0,6; Fe - Rest, einen Füllstoff, der sich in einem Hohlraum mit ovalem Querschnitt befindet und folgende pulverförmige, schlackenbildende Komponente enthält: CaO, $BaF_2$, $MgF_2$ und die Legierungskomponente Ni, und Überzüge, die sich auf der Oberfläche des Drahts und der Hohlräume befinden und aus je zwei Schichten Cu und Al bestehen, die Legierungskomponenten darstellen. Dabei befinden sich 90 % der Masse der Komponenten Cu und Ni des Überzugs auf der Oberfläche des Drahts und 10 % ihrer Masse auf der Oberfläche des Hohlraums. Die Gesamtfläche der Schichten der Überzüge im Querschnitt des Drahts, die aus der Komponente Cu bestehen, beträgt 0,01 . der Fläche der Metallgrundlage, und aus der Komponente Al - 0,02 der Fläche der Metallgrundlage. Die aus Cu bestehenden Schichten liegen unmittelbar an der Metallgrundlage an. Die Dicke der Schichten aus Cu auf der Oberfläche des Drahts und auf der Oberfläche des Hohlraums beträgt $2,4.10^{-3}$ mm bzw. $18,0.10^{-3}$ mm. Die Dicke der Schichten aus Al auf der Oberfläche des Drahts und auf der Oberfläche des Hohlraums beträgt $1,2.10^{-3}$ mm bzw. $9,0.10^{-3}$ mm.

Die Fläche des Hohlraums beträgt 10 % der Fläche des Drahts im Querschnitt. Die relative Brucheinschnürung von Cu, Al und von der Metallgrundlage beträgt 80%, 86% bzw. 36 %.

Beispiel 3

Ein Elektrodendraht mit 1,2 mm Durchmesser hat eine Metallgrundlage, die folgende Stoffe enthält (Masse%):

C - 0,1; Mn - 0,6; Si - 0,4; Fe - Rest, einen Füllstoff, der sich in einem Hohlraum mit ovalem Querschnitt befindet und folgende pulverförmige, schlackenbildende Komponenten enthält: $V_2O_5$, NaF, MgO und die Legierungskomponenten Ti und Al, und Überzüge auf der Oberfläche des Drahts und der Hohlräume, die je aus zwei Schichten Cd und Cu bestehen, die Legierungskomponenten darstellen. Dabei befinden sich 50 % der Masse der Komponenten des Überzugs auf der Oberfläche des Drahts und 50 % seiner Masse - auf der Oberfläche des Hohlraums. Die Gesamtfläche der Schichten des Überzugs im Querschnitt des Drahts, die aus der Komponente Cd bestehen, beträgt 0,02 der Fläche der Metallgrundlage, und aus der Komponente Cu - 0,01 der Fläche der Metallgrundlage. Die aus Cd bestehenden Schichten liegen unmittelbar an der Metallgrundlage an. Die Dicke der Schichten aus Cd auf der Oberfläche des Drahts und auf der Oberfläche des Hohlraums beträgt $2,5 . 10^{-3}$ mm bzw. $45 . 10^{-3}$ mm. Die Dicke der Schichten aus Cu auf der Oberfläche des Drahts und auf der Oberfläche des Hohlraums beträgt $1,25 . 10^{-3}$ mm bzw. $22,5 . 10^{-3}$ mm. Die Fläche des Hohlraums beträgt 10 % der Fläche des Drahts im Querschnitt. Die Plastizität der Komponente Cd in der an der Metallgrundlage anliegenden Schicht und der Komponente Cu in der am weitesten von ihr entfernten Schicht ist größer als die Plastizität der Metallgrundlage. Die relative Bruche-Einschnürung von Cd, Cu und von der Metallgrundlage beträgt 88%, 80% bzw. 49%.

Beispiel 4

Ein Elektrodendraht mit 1,2 mm Durchmesser hat eine Metallgrundlage, die folgende Stoffe enthält (Masse%): C - 0,1; Mn - 1,2; Ni - 0,9; Mo - 0,2; Si - 0,15; Fe - Rest, einen Füllstoff, der sich in einem Hohlraum mit zylindrischer Form befindet und folgende pulverförmige Komponenten enthält: $CaF_2$, $BaF_2$, $SiO_2$ und MnO und die Legierungskomponente Al, und einen Überzug der zwei Schichten aus den Komponenten Ca und Zr auf der Oberfläche des Drahts und vier Schichten aus den Komponenten Ca, Zr,

$MgF_2$ und Ni auf der Oberfläche des Hohlraums hat. Dabei befinden sich 25 % der Masse der Komponenten des Überzugs auf der Oberfläche des Drahts und 75% seiner Masse - auf der Oberfläche des Hohlraums. Die Gesamtfläche der Schichten des Überzugs im Querschnitt des Drahts, die aus den Komponenten Ca, Zr, $MgF_2$ und Ni bestehen, beträgt 0,001 Teil der Fläche des Querschnitts der Metallgrundlage. Die aus Ca und Zr bestehenden Schichten auf der Oberfläche des Drahts haben eine Dicke von $0,13.10^{-3}$ mm. Die Dicke der aus Ca, Zr, $MgF_2$ und Ni bestehenden Schichten auf der Oberfläche des Hohlraums beträgt $2,25.10^{-3}$ mm, $2,25.10^{-3}$ mm, $4,5.10^{-3}$ mm bzw. $4,5.10^{-3}$ mm. Die Fläche des Hohlraums beträgt 10 % der Fläche des Drahts im Querschnitt. Die aus Ca bestehenden Schichten liegen unmittelbar an der Metallgrundlage an. Die Plastizität des Ca in den an der Metallgrundlage anliegenden Schichten und die Plastizität des Ni in der am weitesten von der Metallgrundlage entfernten Schicht ist größer als die Plastizität der Metallgrundlage. Die relative Brucheinschnürung von Ca, Ni und von der Metallgrundlage beträgt 89%, 72% bzw. 30%. Die relative Einschnürung von $MgF_2$ ist kleiner als die Plastizität der Metallgrundlage, und die aus dieser Komponente bestehende Schicht befindet sich zwischen den Schichten aus Zr und Ni, deren Plastizität größer ist als die Plastizität der Metallgrundlage. Die relative Einschnürung von Zr beträgt 65%.

Beispiel 5

Ein Elektrodendraht mit 1,2 mm Durchmesser hat eine Metallgrundlage, die folgende Stoffe enthält (Masse%): C - 0,1; Mn - 0,9; Ni - 0,4; Mo - 0,4; Si - 0,3; Fe - Rest, einen Füllstoff, der sich in einem zylindrischen Hohlraum befindet und folgende pulverförmige Komponenten enthält: $BaF_2$ $V_2O_3$ und CaO und die Legierungskomponente Cr, und einen Überzug, der zwei Schichten aus den Komponenten Co und Cu auf der Oberfläche des Drahts und vier Schichten aus den Komponenten Nb, Al, $BaCl_2$ und Ni hat. Die Schicht aus der Komponente Co und die Schicht aus der Komponente

- 22 -

Nb liegen unmittelbar an der Metallgrundlage an. 90% der Masse der Komponenten des Überzugs befinden sich auf der Oberfläche der Hohlräume und 10% der Masse — auf der Oberfläche des Drahts. Die Gesamtfläche der Schichten des Überzugs im Querschnitt des Drahts, die aus den Komponenten Co, Cu, Nb, Al, $BaCl_2$ und Ni bestehen, beträgt 0,0013, 0,0013, 0,002, 0,002, 0,004 bzw. 0,004 der Fläche des Querschnitts der Metallgrundlage. Die Dicke der aus Co und Cu bestehenden Schichten auf der Oberfläche des Drahts beträgt $0,35.10^{-3}$ mm bzw. $0,35.10^{-3}$ mm. Die aus Nb, Al, $BaCl_2$ und Ni bestehenden Schichten haben eine Dicke von $9,0.10^{-3}$ mm, $9,0.10^{-3}$ mm, $18,0.10^{-3}$ mm bzw. $18,0.10^{-3}$ mm. Die Fläche des Hohlraums beträgt 10% der Fläche des Drahts im Querschnitt. Die Plastizität des Co in der an der Metallgrundlage anliegenden Schicht und die Plastizität des Ni in der am weitesten von der Metallgrundlage entfernten Schicht ist größer als die Plastizität der Metallgrundlage. Die relative Bruch einschnürung von Co, Ni und der Metallgrundlage beträgt 76%, 72% bzw. 36%. Die relative Einschnürung von $BaCl_2$ beträgt 16%. Die Plastizität der schlackenbildenden Komponente $BaCl_2$ ist geringer als die Plastizität der Metallgrundlage. Die Schicht aus $BaCl_2$ befindet sich zwischen den Schichten aus Al und Ni, deren Plastizität größer ist als die Plastizität der Metallgrundlage.

Beispiel 6

Ein Elektrodendraht mit 1,2 mm Durchmesser hat eine Metallgrundlage, die folgende Stoffe enthält (Masse%): C - 0,1; Mn - 0,9; Ni - 0,2; Mo - 0,2; Si - 0,15; Fe - Rest, einen Füllstoff, der sich in einem zylindrischen Hohlraum befindet und die pulverförmigen Komponenten $TiO_2$, $V_2O_5$ und CaO und die Legierungskomponenten Cr und Co enthält, und einen Überzug der zwei Schichten aus den Komponenten Cu und Al auf der Oberfläche des Drahts und vier Schichten aus Cu, Al, $MgF_2$ und Ni hat. Die Schichten aus der Komponente Cu liegen unmittelbar an der Metallgrundlage an. Dabei befinden sich 99% der Masse der Komponenten des Überzugs auf der Oberfläche des Hohlraums und 1% der Masse des Überzugs -- auf der Oberfläche des Drahts.

Die Gesamtfläche der Schichten des Überzugs im Querschnitt des Drahts, die aus den Komponenten Cu, Al, $MgF_2$ und Ni bestehen, beträgt 0,002, 0,004, 0,004 bzw. 0,002 der Fläche des Querschnitts der Metallgrundlage. Die aus Cu und Ni bestehenden Schichten auf der Oberfläche des Drahts haben eine Dicke von je $0,15.10^{-3}$ mm. Die Schichten aus Cu, Al, $MgF_2$ und Ni haben eine Dicke von $9,0.10^{-3}$ mm, $18,0.10^{-3}$ mm, $18,0.10^{-3}$ mm bzw. $9,0.10^{-3}$ mm. Die Fläche des Hohlraums beträgt 10% der Fläche des Drahts im Querschnitt.

Beispiel 7

Ein Elektrodendraht mit 1,4 mm Durchmesser hat eine Metallgrundlage, die folgende Stoffe enthält (Masse%): C - 0,12; Mn - 1,4; Si - 0,4; Mo - 0,2; Ti - 0,2; Fe - Rest, einen Füllstoff, der sich in einem ovalen Hohlraum befindet und die schlackenbildende Komponente $TiO_2$ enthält, und einen Überzug, der drei Schichten hat, die aus den Komponenten Cd, W und Al bestehen. Dabei befinden sich 90% der Masse des Überzugs auf der Oberfläche des Drahts und die übrigen 10% - auf der Oberfläche des Hohlraums. Die Gesamtfläche der Schichten des Überzugs im Querschnitt des Drahts, die aus den Komponenten Cd, W und Al bestehen, beträgt 0,08, 0,01 bzw. 0,08 der Fläche des Querschnitts der Metallgrundlage. Die Schichten aus Cd, W und Al auf der Oberfläche des Drahts haben eine Dicke von $20,5.10^{-3}$ mm $2,0.10^{-3}$ mm bzw. $20,5.10^{-3}$ mm. Die Schichten aus Cd, W und Al auf der Oberfläche des Hohlraums haben eine Dicke von $50,0.10^{-3}$ mm $6,2.10^{-3}$ mm bzw. $50,0.10^{-3}$ mm. Die Fläche des Hohlraums beträgt 20% der Fläche des Drahts im Querschnitt. Die Schichten des Überzugs aus W, dessen Plastizität (relative Einschnürung 8%) kleiner ist als die Plastizität der Metallgrundlage (relative Einschnürung 40%), befinden sich zwischen den Schichten aus Cd und Al, deren Plastizität größer ist als die Plastizität der Metallgrundlage (die relative Einschnürung von Cd und Al beträgt 88 bzw. 86%). Anstelle von $TiO_2$ können Komponenten aus der Gruppe der

- 24 -

Chloride, Fluoride, Karbide und Oxide von Mg, Al, Si, Ca, Ti, V, Cr, Mn, Co, Ni, Cu, Y, Zr, Nb, Mo, Cd, Ba, La, Ta, W und Ce als schlackenbildende Bestandteile dem Füllstoff zugesetzt werden.

Beispiel 8

Ein Elektrodendraht mit 1,4 mm Durchmesser hat eine Metallgrundlage, die folgende Stoffe enthält (Masse%): C - 0,12; Mn - 1,4; Si - 0,5; Mo - 0,2; Ti - 0,2; Fe - Rest, einen Füllstoff, der sich in einem langgestreckten Hohlraum befindet und die schlackenbildenden Komponenten $TiO_2$, NaCl und Cr enthält, und einen Überzug, der drei Schichten hat, die aus den Komponenten Cd, W und Al bestehen. Dabei befinden sich 90% der Masse des Überzugs auf der Oberfläche des Drahts und die übrigen 10% - auf der Oberfläche des Hohlraums. Die Gesamtfläche der Schichten des Überzugs im Querschnitt des Drahts, die aus den Komponenten Cd, W und Al bestehen, beträgt 0,08, 0,01 bzw. 0,08 der Fläche des Querschnitts der Metallgrundlage. Die Schichten aus Cd, W und Al auf der Oberfläche des Drahts haben eine Dicke von $20,5.10^{-3}$ mm, $2,6.10^{-3}$ mm bzw. $20,5.10^{-3}$ mm. Die Schichten aus Cd, W und Al auf der Oberfläche des Hohlraums haben eine Dicke von $50.10^{-3}$ mm, $6,2.10^{-3}$ mm bzw. $50.10^{-3}$ mm. Die Fläche des Hohlraums beträgt 20% der Fläche des Drahts im Querschnitt. Anstelle der Legierungskomponenten Cd, W, Al und Cr können Mg, Si, Ca, Ti, V, Mn, Co, Ni, Cu, Y, Zr, Nb, Mo, Ba, La, Ta, Ce verwendet werden.

Beispiel 9

Ein Elektrodendraht mit 1,4 mm Durchmesser hat eine Metallgrundlage, die folgende Stoffe enthält (Masse%): C - 0,07; Mn - 1,4; Al - 1,2; Fe - Rest, einen Füllstoff, der sich in vier zylindrischen Hohlräumen befindet und der die schlackenbildenden Komponenten $CaF_2$, $V_2O_5$ und die Legierungskomponenten Cr und Nb enthält, und einen Überzug, der drei Schichten hat, die aus den Komponenten Co, $BaF_2$ und Ta bestehen. Dabei befinden sich 90% der Masse des Überzugs auf der Oberfläche des Drahts und die übrigen

- 25 -

10% - auf der Oberfläche des Hohlraums. Die Schichten aus Co, $BaF_2$ und Ta auf der Oberfläche des Drahts haben eine Dicke von $20,5.10^{-3}$ mm, $2,6.10^{-3}$ mm bzw. $20,5.10^{-3}$ mm und auf der Oberfläche jedes Hohlraums - $12.10^{-3}$ mm bzw. $1,4.10^{-3}$ mm. Die Fläche jedes Hohlraums beträgt 5% der Fläche des Drahts im Querschnitt. Die am weitesten von der Metallgrundlage entfernte Schicht besteht aus der Legierungskomponente Ta, während die an der Metallgrundlage anliegende Schicht aus der Legierungskomponente Co besteht. Die zwischen den genannten Schichten liegende Schicht besteht aus der schlackenbildenden Komponente $BaF_2$.

Beispiel 10

Es liegt ein ähnlicher Elektrodendraht wie im Beispiel 9 vor, jedoch mit dem Unterschied, daß als schlackenbildende Komponente $CaF_2$ anstelle $BaF_2$ verwendet worden ist.

Beispiel 11

Ein Elektrodendraht mit 1,0 mm Durchmesser hat eine Metallgrundlage, die folgende Stoffe enthält (Masse%): C - 0,12; Mn - 0,7; Si - 0,03; Fe - Rest, einen Füllstoff, der sich in drei langgestreckten Hohlräumen befindet und $CaF_2$, $BaCl_2$ und V enthält, und einen Überzug der fünf Schichten hat, die aus den Komponenten Zr, MnC, Cd, WC, Al bestehen.

Die Schichten des Überzugs aus Zr, MnC, Cd, WC und Al auf der Oberfläche des Drahts haben eine Dicke von $5,0.10^{-3}$ mm $2,0.10^{-3}$ mm, $5,0.10^{-3}$ mm, $2,0.10^{-3}$ mm bzw. $5,0.10^{-3}$ mm. Die Schichten des Überzugs aus Zr, MnC, Cd, WC und Al auf der Oberfläche jedes Hohlraums haben eine Dicke von $10,0.10^{-3}$ mm, $6,0.10^{-3}$ mm, $10,0.10^{-3}$ mm, $6,0.10^{-3}$ mm bzw. $10,0.10^{-3}$ mm. Die Schichten des Überzugs aus den Komponenten MnC und WC, deren Härte größer ist als die Härte der Metallgrundlage, befinden sich zwischen den Schichten aus den Komponenten Zr, Cd und Al, deren Härte kleiner ist als die Härte der Metallgrundlage. Die Härte von Zr, MnC, Cd, WC, Al und der Metallgrundlage beträgt (Härtegrade): 3;6; 2,2; 9,7; 2,8 bzw. 5.

- 26 -

Beispiel 12

Es liegt ein ähnlicher Elektrodendraht wie im Beispiel 8 vor, jedoch mit dem Unterschied, daß der Füllstoff eine zusätzliche schlackenbildende Komponente $BaF_2$ enthält. Die Härte der Komponente Cd in der an der Metallgrundlage anliegenden Schicht und der Komponente Al in der am weitesten von der Metallgrundlage entfernten Schicht ist kleiner als die Härte der Metallgrundlage. Die Härte von Cd, Al und der Metallgrundlage beträgt (Härtegrade): 2,2; 2,8 bzw. 6.

Beispiel 13

Es liegt ein ähnlicher Elektrodendraht wie im Beispiel 9 vor, jedoch mit dem Unterschied, daß der Füllstoff zusätzlich die schlackenbildende Komponente $Cr_2O_3$ und nicht die Legierungskomponente Cr enthält. Die Oberfläche des Drahts hat einen Überzug, dessen Schichten aus den Legierungskomponenten Co und Ta und außerdem aus der schlackenbildenden Komponente $BaF_2$ bestehen, die alle stromleitend sind.

Beispiel 14

Es liegt ein ähnlicher Elektrodendraht wie im Beispiel 9 vor, jedoch mit dem Unterschied, daß im Überzug anstelle der aus der schlackenbildenden Komponente $BaF_2$ bestehenden Schicht eine Schicht verwendet wird, die aus einander abwechselnden Abschnitten aus den Komponenten Cu und NaCl bestehen. Die Legierungskomponente Cu ist stromleitend, während die schlackenbildende Komponente NaCl ein nichtleitender Stoff ist.

Der in den Beispielen 1 bis 14 beschriebenen Elektrodendraht ermöglicht eine Senkung der Verluste an Legierungskomponenten beim Schmelzen des Drahts um das 4- bis 10-fach eine Erhöhung der Leistung des Schweißprozesses um das 3- bis 7-fache und vermeidet das Verspritzen des Metalls. Die Verwendung der genannten Überzüge ermöglichte eine Erhöhung der Plastizität der Metallgrundlage beim Kaltverformen des Drahts um das 2- bis 3-fache und die Herstellung von Draht mit einem Durchmesser unter 1,6 mm. Die Verwendung von Draht mit einem Durchmesser unter 1,6 mm schafft die Voraussetzungen zur Herstellung von Schweißnähten mit erhöhter
Schlagzähigkeit und einer geringeren Porösität.

- 28 -

Industrielle Anwendbarkeit

Mit dem größten Erfolg kann die Erfindung beim Schutzgas-Lichtbogenschweißen mit einer Schmelzelektrode oder ohne zusätzlichen Schutz bei der Herstellung von Metallkonstruktionen aus niedriggekohlten und niedriglegierten Stählen verwendet werden.

Außerdem kann die Erfindung beim Aufschmelzen sowie als Zusatzmaterial beim Schweißen mit nicht abschmelzender (Wolfram)Elektrode und beim Löten verwendet werden.

- 29 -

PATENTANSPRÜCHE

1. Elektrodendraht, der aus einer legierten Metallgrundlage (1, 10, 21, 32, 43, 59) besteht, die wenigstens einen längsgerichteten Hohlraum (3, 12, 23, 34, 45, 61) hat, der mit einem Füllstoff (2, 11, 22, 33, 44, 60) gefüllt ist, der wenigstens eine Komponente einer aus schlackenbildenden und Legierungskomponenten bestehenden Gruppe enthält, dadurch g e k e n n z e i c h n e t , daß die Oberfläche des Hohlraums (3, 12, 23, 34, 45, 61) und des Drahts einen Überzug (4 und 7, 13 und 18, 24 und 28, 35 und 39,46 und 52,62 und 66) hat, der wenigstens zwei Schichten (5,6; 8,9; 14, 15, 16, 17, 19, 20, 25, 26, 27; 29, 30, 31; 36, 37, 38; 40, 41, 42; 47, 48, 49; 50, 51; 53, 54, 55, 56, 57, 58; 63, 64, 65, 68, 69, 70) enthält, von denen jede aus einer Komponente besteht, die aus einer Legierungs- und schlackenbildenden Komponenten bestehenden Gruppe ausgewählt ist, wobei 10 bis 99% der Masse der Komponenten der Schichten (5, 6; 8, 9; 14, 15, 16, 17; 19, 20; 25, 26, 27; 29, 30, 31; 36, 37, 38; 40, 41, 42; 47, 48, 49, 50, 51; 53, 54, 55, 56, 57, 58; 63, 64, 65; 68, 69, 70) des Überzuges (4,7; 13, 18; 24, 28; 35,39; 46, 52; 62, 66) sich auf der Oberfläche des Hohlraums (3, 12, 23, 34, 45, 61) befinden und die Gesamtfläche der Schichten (5, 6; 8, 9; 14, 15, 16, 17; 19, 20; 25, 26, 27; 29, 30, 31; 36, 37, 38; 40, 41, 42; 47, 48, 49; 50, 51; 53, 54, 55, 56, 57, 58; 63, 64, 65; 68, 69, 70) des Überzuges (4, 7; 13, 18; 24, 28; 35, 39; 46, 52; 62, 66) im Querschnitt des Drahts, die aus gleichen Komponenten bestehen, 0,001 bis 0,1 der Fläche der Metallgrundlage (1, 10, 21, 32, 43, 59) beträgt.

2. Elektrodendraht nach Anspruch 1, dadurch g e k e n n z e i c h n e t , daß die Legierungskomponenten aus einer Gruppe ausgewählt werden, die aus Mg, Al, Si, Ca, Ti, V, Cr, Mn, Co, Ni, Cu, Y, Zr, Nb, Mo, Cd, Ba, La, Ta, W und Ce und die schlackenbildenden Komponenten aus einer Gruppe ausgewählt werden, die aus Karbiden, Oxiden, Chloriden und Floriden von Mg, Al, Si, Ca, Ti, V, Cr, Mn, Co, Ni, Cu, Y, Zr, Nb, Mo, Cd, Ba, La, Ta, W und Ce besteht.

3. Elektrodendraht nach Anspruch 1, dadurch g e - k e n n z e i c h n e t , daß die Plastizität der Komponenten der an der Metallgrundlage (21) anliegenden Schicht (27, 31) und der Komponenten der am weitesten von ihr entfernten Schicht (25, 29) größer ist als die Plastizität der Metallgrundlage (21).

4. Elektrodendraht nach Anspruch 3, dadurch g e - k e n n z e i c h n e t , daß die Schichten (26, 30) des Überzugs (24, 28) aus Komponenten, deren Plastizität kleiner ist als die Plastizität der Metallgrundlage (21), sich zwischen den Schichten (25 und 27, 29 und 31) aus Komponenten, deren Plastizität größer ist als die Plastizität der Metallgrundlage (21), befinden.

5. Elektrodendraht nach Anspruch 1, dadurch g e - k e n n z e i c h n e t , daß die Oberfläche des Drahts einen Überzug (39) hat, dessen Schichten (40, 41, 42) aus stromleitenden Legierungs- und schlackenbildenden Komponenten bestehen.

6. Elektrodendraht nach Anspruch 1, dadurch g e - k e n n z e i c h n e t , daß die Oberfläche des Drahts einen Überzug (66) hat, der aus wenigstens drei Schichten (68, 69, 70) besteht und bei dem die am weitesten von der Metallgrundlage (59) entfernte Schicht (70) und die an der Metallgrundlage (59) anliegende Schicht (68) aus stromleitenden Legierungs- und schlackenbildenden Komponenten bestehen und die zwischen diesen Schichten (68, 70) befindliche Schicht (69) aus Abschnitten (71), die aus stromleitenden Legierungs- und schlackenbildenden Komponenten und abwechselnd mit diesen entlang des Drahts aus Abschnitten (72), die aus nichtleitenden Legierungs- und schlackenbildenden Komponenten bestehen, zusammengesetzt ist.

7. Elektrodendraht nach Ansprüchen 1 bis 4, dadurch g e k e n n z e i c h n e t , daß sich auf der Oberfläche

- 31 -

des Drahts ein aus wenigstens drei Schichten bestehender Überzug (28) befindet, bei dem die am weitesten von der Metallgrundlage (21) entfernte Schicht (31) und die an der Metallgrundlage (21) anliegende Schicht (29) aus Legierungskomponenten bestehen, während die sich zwischen diesen Schichten (29, 31) befindende Schicht (30) aus schlackenbildenden Komponenten besteht.

8. Elektrodendraht nach Ansprüchen 1 bis 4, dadurch g e k e n n z e i c h n e t, daß die Härte der Komponenten der an der Metallgrundlage (21) anliegenden Schicht (29) und der am weitesten von ihr entfernten Schicht (31) geringer ist als die Härte der Metallgrundlage (21).

9. Elektrodendraht nach Ansprüchen 1 bis 4, dadurch g e k e n n z e i c h n e t , daß die Schichten (30) des Überzuges (28) aus Komponenten, deren Härte größer ist als die Härte der Metallgrundlage (21), sich zwischen den Schichten (29 und 31) aus Komponenten befinden, deren Härte geringer ist als die Härte der Metallgrundlage (21).

EP 0 396 743 A1

FIG.1

FIG. 2

FIG. 3

FIG. 4

FIG. 5

FIG. 6

# INTERNATIONAL SEARCH REPORT

## I. CLASSIFICATION OF SUBJECT MATTER (if several classification symbols apply, indicate all) *

According to International Patent Classification (IPC) or to both National Classification and IPC

IPC      B23K 35/10,35/368

## II. FIELDS SEARCHED

| Minimum Documentation Searched [7] | |
|---|---|
| Classification System | Classification Symbols |
| 4 IPC | B23K 35/00, 35/02, 35/08,35/10, 35/368 |

Documentation Searched other than Minimum Documentation
to the Extent that such Documents are included in the Fields Searched *

## III. DOCUMENTS CONSIDERED TO BE RELEVANT *

| Category * | Citation of Document, [11] with indication, where appropriate, of the relevant passages [12] | Relevant to Claim No. [13] |
|---|---|---|
| A | SU, A1, 505543 (Zhdanovsky metallurgichesky institut) 08 September 1976 (08.09.76) | 1 |
| A | US, A, 4137446 (ACIERIES REUNIES DE BURBACHEICH-DUDELANGE S. S. ARBED) 30 January 1979 (30.01.79)  see the abstract | 1 |
| A | US, A, 3555240 (ELEKTRODENFABRIK OERLIKON BUHRLE AG)    12 January 1971 (12.01.71) see the abstract,figures 3,4 | 1 |
| A | GB, B, 1385121 (EUTECTIC CORPORATION) 26 February 1975 (26.02.75) see the claims | 5 |
| A | GB, B, 1485571 (ACIERIES REUNIES DE BURBACHEICH-DUDELANGE S.A. ARBED) 14 September 1977 (14.09.77) see figure 2 | 1 |
| A | FR, A1, 2445751 (ALLIAGES FRITTES S.A.) 01 August 1980 (01.08.80) see the claims, figure 1 | 1,6 |
| A | EP, A3, 0097306 (SCM CORPORATION) 04 January 1984 (04.01.84) see the abstract | 1 |

---

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 13 July 1989 (13.07.89) | 7 August 1989 (07.08.89) |
| International Searching Authority | Signature of Authorized Officer |
| ISA/SU | |